# EUROPEAN PATENT APPLICATION

(11) **EP 1 296 104 A2**
(43) Date of publication of application: **26.03.2003**
(21) Application number: 02020752.8
(22) Date of filing: 16.09.2002
(51) Int. Cl.: F24J 2/04, E04D 13/18

(54) **Integrated modular system for coverings for roofs and outside walls**

(30) Priority: 19.09.2001 IT UD20010149
(71) Applicant: CarliEUklima SpA, 33170 Pordenone (IT)
(72) Inventor: Martorel, Gastone, 31020 San Fior (TV) (IT)
(74) Representative: Petraz, Gilberto Luigi

(57) **Abstract**

Integrated modular system to make covering surfaces (14) for roofs or outside walls of buildings, comprising panels (15) associated with means for the circulation of a thermal carrier fluid and means to attach the panels (15) to the bearing structure and/or to other adjacent panels (15). The attachment means (18) are selectively associated with a clamping element of a first type (19) or with a clamping element of a second type (19a) to join together at least two of the adjacent panels (15), the clamping element of the second type (19a) comprising lateral extensions (26) on which at least a supplementary panel (25) rests.

## Description

### FIELD OF THE INVENTION

The present invention concerns an integrated modular system for coverings and walls in general, intended to make covering surfaces for roofs and outside walls in structures suitable to exploit solar energy.

The present invention can be applied in coverings and walls of every type, such as for example industrial hangars, public and private buildings such as homes, offices, schools and churches, public meeting places and places of entertainment.

### BACKGROUND OF THE INVENTION

The use of panels which exploit solar energy is known and increasingly widespread. Such panels consist of a capturing plate and a heat insulation which reduces heat losses.

There are known also some technical solutions intended to integrate or assemble one or more solar panels in existing buildings, just as there are known design solutions to integrate said panels in new buildings.

EP-A1-0 073 843 and DE-A1-195 32 636 describe two examples of covering for roofs comprising metal plates with which channels are associated for a thermal carrier fluid and insulating plates to reduce the losses of solar energy captured. The metal plates are laid directly to cover the bearing structure of the roof and constitute the final outer covering thereof.

WO 81/00445 describes cement modules with an inner channeling which makes them suitable to function as solar energy collectors. These modules can also be used as the outer covering of buildings.

WO 99/63280 describes another example of covering for the bearing structure of a roof by means of metal plates with a channel for the thermal carrier fluid and a heat-insulating layer on the lower surface. The plates are assembled overlapping along at least their longitudinal edges so as to form a water-tight covering, and are provided to support outer loads such as those caused by snow or personnel doing maintenance on the roof.

EP-A2-1 071 139 describes a module for covering roofs comprising photo-voltaic cells and DE-A1-39 43 516 describes a module for covering roofs and walls which uses photo-voltaic cells integrated into a transparent supporting plate.

The capturing plate of a solar collector which transmits the energy captured to a thermal carrier fluid must have a high coefficient of absorption of the solar radiations, and a low coefficient of infra-red emission.

This plate can be made of any material provided it is suitable for the purpose and the type of application (metal, cement, plastic materials) but most commonly it is a sheet of copper, aluminum or steel.

The solar energy absorbed by the capturing plate is transmitted to a thermal carrier fluid which, through a hydraulic circuit, distributes it to the system which uses it.

There are different technologies to make a good thermal contact between the thermal carrier fluid, which usually circulates in channels, and the capturing plate, such as for example the "Roll-bond"® process, in which the channel is made by means of rolling two aluminum plates, or by means of a coil of copper pipe located in heat contact with the capturing plate by means of riveting, welding or other techniques known in the state of the art.

It has always been too expensive and complex to assemble solar panels, both those using a thermal carrier fluid and those consisting of photo-voltaic cells, in existing or newly constructed buildings; in fact, such solar panels are normally available as autonomous elements to be inserted at a subsequent time on pre-existent structures or on structures which have been designed traditionally and which are almost never suitable to have solar panels conceived in this way easily integrated therein.

Therefore, different techniques have been used to make coverings for roofs and outside walls with simple modular elements provided with means to absorb solar energy. These attempts derive from the need to use simple, inexpensive materials which can efficiently replace those traditionally used for said coverings and which allow to exploit solar energy with acceptable additional costs with respect to the benefits which can be obtained.

There are also examples of joints for said modular elements in order to ensure both a good impermeability of the covering and also a pleasant appearance of its surface, at least equal to that of similar surfaces covered with traditional structures and technologies.

The Applicant has devised and embodied the present invention to overcome all the shortcomings as mentioned above, and to obtain other advantages.

### SUMMARY OF THE INVENTION

The purpose of the present invention is to propose an integrated modular covering which not only allows to exploit solar energy, but which offers complete flexibility with regard to the level of efficiency and also the type of energy produced (heat or electric energy).

The purpose of the invention is therefore to achieve an easily installed, stable covering for an outside wall or the roof of a building, comprising integrated means to capture the solar radiations so as to exploit, with high yield, the solar energy for heating water and, possibly, to produce electric energy.

Another purpose of the invention is to achieve a covering system for roofs and outside walls which can easily be modified even at a subsequent time after the first installation, according to the specific requirements of the user with regard to the production of hot water and/or electric energy.

A further purpose of the invention is to reduce problems deriving from installations in places characterized by high temperature ranges, and/or both very high maximum and very low minimum temperatures.

These and other objectives are achieved by means of an integrated modular system which, starting from a basic installation which provides only the production of hot water, can be subsequently integrated, simply and quickly, both with an additional transparent panel, which increases efficiency in producing hot water (making the covering similar to a traditional solar panel), and also with an additional element for the production of electric energy by means of using photo-voltaic cells.

The integrated modular system according to the invention is therefore based on the use of construction elements, such as panels made of sheet metal or other materials, which ready exist and are used as covering.

These elements are integrated, that is, supplied, with proven and relatively inexpensive techniques, with simple components to capture solar energy (means for the circulation of the thermal carrier fluid), and then assembled with a flexible modular system.

This system allows a subsequent easy implementation to obtain a greater efficiency in capturing the solar energy, or higher energy forms, simply by using support and attachment elements without the disadvantage of removing the basic covering structure of the panels which form the covering.

The invention substantially consists of an integrated modular system to achieve covering surfaces for roofs or outside walls of buildings comprising at least a panel operatively associated with means for the circulation of a thermal carrier fluid, means to assemble the panel to the bearing structure of the covering and means to join the panel with adjacent panels as set forth in claim 1.

The dependent claims contain additional claims of other advantageous forms of embodiment of the invention.

The joining means comprise an attachment profile on which the longitudinal edges of at least two adjacent panels rest, and at least a clamping element to achieve a stable connection between the panels and said attachment profile.

The particular conception of the attachment and clamping means gives great flexibility to the covering system.

The panel, advantageously made of metal sheet, is similar to that used commonly on the market for covering buildings, particularly industrial buildings. This panel however also has the function of absorbing solar radiation and of transmitting the energy captured to a thermal carrier fluid which is made to circulate inside means provided for its circulation and associated with the panel.

The circulation means consists of one or more independent hydraulic circuits.

These circuits, according to a first solution, are made directly in the panel, for example by means of molding and welding the sheet metal.

In a second solution, these circuits consist of one or more pipes inserted into the sheet of the panel, suitably pre-shaped so as to obtain cavities which develop according to the desired path of the circuits; the pipes in which the thermal carrier fluid circulates are at least partly inserted into said cavities.

In a third solution, these circuits in which the thermal carrier fluid circulates consist of one or more continuous tubes mechanically fixed on any one of the surfaces of the panel (the one to be exposed to the solar rays or the one opposite, hereafter referred to, for the sake of simplicity, as respectively upper and lower), by means of attachment means or welding.

The circuits in which the thermal carrier fluid circulates, both when they are made directly by means of molding the sheet of the panel and also when they consist of pipes associated with the sheet of the panel, advantageously have a circular cross section, but they can also have a different shape section, such as for example oval, polygonal, rectangular or other.

The circuits in which the thermal carrier fluid circulates can develop transversely, longitudinally or mixed with respect to the surface of the panel, which is generally but not restrictively rectangular.

Advantageously, each panel can have a plurality of means for the circulation of the thermal carrier fluid, both with regard to the arrangement of the circuits and also for the way in which they are obtained.

The thermal carrier fluid circulating inside the circulation means is fed at low temperature, for example by means of a delivery collector, and is discharged at a higher temperature by means of at least a return collector.

The sheet panel can have different widths according to the size of the coverings to be made.

According to a variant, between two adjacent sheet panels, or in an intermediate position to them, there are guide profiles present able to cooperate with attachment elements able to slide, outside or inside, on said profiles. The sliding attachment elements, above which the lining and covering elements are later attached, are made of compact material such as wood, PVC or other suitable material, and cooperate with the relative guide profiles with a certain lateral, upper or lower play, which allows a free though controlled movement thereof, both longitudinal and transverse.

The invention provides that a plurality of said sliding attachment elements are inserted inside a relative guide profile, and that two adjacent attachment elements are separated by suitable spacer means made of at least partly elastic material so as to allow an at least partial heat dilation of the lining above, after it has been laid.

According to a variant, free spaces are left between two adjacent attachment elements which allow this dilation. According to another variant, at least part of the sliding attachment elements is made of heterogeneous rigid-elastic material in order to absorb these dilations.

This solution allows to use, as lining or covering, also materials characterized by a high coefficient of linear dilation, of whatsoever length, and also for applications in places characterized by high temperature ranges and both very high maximum and very low minimum temperatures.

In a preferential embodiment, the length of each of said sliding attachment elements is less than the interaxis with which the attachment means of the covering are applied, so that every attachment element is burdened by only one attachment point.

The guide profiles are attached directly to the bearing structure of the building, advantageously by screws, nails or similar.

When a greater quantity of heat is required to be produced, the integrated modular system according to the invention provides that at least a supplementary panel be applied above the panel itself.

The function of this supplementary panel, advantageously consisting of glass or another material which is transparent to solar radiation, is to create a greenhouse effect and to reduce heat losses from the capturing panel to the atmosphere, thus increasing the yield of the system.

In a further evolution, the invention provides the possibility to produce electric energy using, as a supplementary panel, a panel advantageously made of material transparent to solar radiations, on which the desired quantity of photo-voltaic cells are inserted or integrated.

The sheet panels can consist of plates of pre-painted aluminum, oxidized copper, zinc plated and pre-painted sheet metal, pre-painted stainless steel and other materials with a high coefficient of solar radiation absorption.

Preferably a layer consisting of a heat insulating material is operatively associated with every panel, on its lower surface. The insulating material is advantageously made solid with the sheet panel by means of a glue resistant to the temperature ranges to which the sheet is usually subject, and to the differential heat dilations between the sheet of the panel and the insulating material itself.

The insulating material can however be simply drawn near and mechanically attached in contact with the sheet panel, so that the differential heat dilations have no negative effect on the panel-insulating material coupling.

To make the final covering of the roof or the outside walls of a building, the sheet panels, comprising the means for the circulation of the thermal carrier fluid and the possible layer of insulating material, are joined together and simultaneously with the possible supplementary panels, whether they be transparent panels or panels comprising photo-voltaic cells, according to the choices of the integrated modular system to be installed.

According to the invention, these components are joined together by means of an attachment profile with which the longitudinal edges of the panels cooperate.

This profile is preferably made of a material which is thermally and electrically insulated, resistant to low temperatures but also to the heat dilations which can be considerable in a covering for roofs or outside walls of buildings.

The attachment profile is able to cooperate either with a clamping element of a first type, used in the absence of supplementary panels, the function of which is to connect together the longitudinal edges of two panels intended to be assembled one adjacent to the other, or with a clamping element of a second type with the further function of supporting and attaching the supplementary panels too. These supplementary panels can thus be assembled even after a first installation with simple and rapid interventions which do not require substantial modifications to the basic structure already set up.

The attachment profile advantageously has a longitudinal slit along the lower central part (the part intended to rest on the bearing structure of the roof or the outside wall) which can be used as a seating for the attachment means of the drainpipes, gutters and/or other elements.

In a preferential embodiment the attachment profile is equipped with electric connection means with the electric elements of the supplementary photo-voltaic panels.

The clamping element of the first type consists of an element with a cross section shaped like an upside down U, or rider, advantageously made of the same material as the sheet panel so as to obtain a uniformity of material and hence a pleasant aesthetic effect. This clamping element is able to cooperate with the raised end edges of two sheet panels to be assembled adjacent to each other.

In a preferential form of embodiment, the clamping element of the second type comprises an extrusion made of metal or plastic material with the double function of connecting together two sheet panels assembled adjacent to each other and of supporting and attaching at least a supplementary panel associated with the sheet panel on the side of the latter intended to be exposed to the solar radiation.

To this end, in one embodiment of the invention, the clamping element of the second type comprises a longitudinal body with transverse wings or extensions intended to constitute the support or supports of the supplementary panels.

In this last solution, a further, upper clamping element is provided which allows to attach all the components of the integrated modular system together in a solid manner. The attachment is usually performed by means of inserting a plurality of attachment elements, such as nails, screws, rivets or otherwise, which clamp the clamping elements to the attachment profile, in this way clamping both the longitudinal ends of the supplementary panels and also the longitudinal ends of the sheet panels.

### BRIEF DESCRIPTION OF THE DRAWINGS

The attached figures are given as a non-restrictive example of the invention, and show some preferential embodiments thereof.

In the figures we have that:
- fig. 1 shows a section of a segment of integrated modular covering formed by capturing plates comprising the supplementary plates;
- figs. 2a and 2b show a section of a segment of integrated modular covering respectively in the two solutions with and without the supplementary panel;
- fig. 3 is a three dimensional view, partly sectioned, of the attachment profile;
- fig. 4a is a three dimensional view of a roof covering of a building with the delivery and return collector means associated with the means for the circulation of the thermal carrier fluid;
- fig. 4b is a three dimensional view of a roof covering of a building wherein the means for the circulation of the thermal carrier fluid are positioned transversely with respect to the roof and to the longitudinal axis of the panels;
- fig. 5 shows a partial transverse section of a roof covering with two pitches with a dome which protects the delivery and return collector means;
- fig. 6 shows a prospective view of a covering made according to a variant of the present invention;
- figs. 7a and 7b show, respectively in the dismantled and assembled condition, a detail of the covering in fig. 6;
- fig. 8 shows a section view of the attachment system of fig. 2b used in the covering in fig. 6.

### DETAILED DESCRIPTION OF A PREFERENTIAL EMBODIMENT OF THE INVENTION

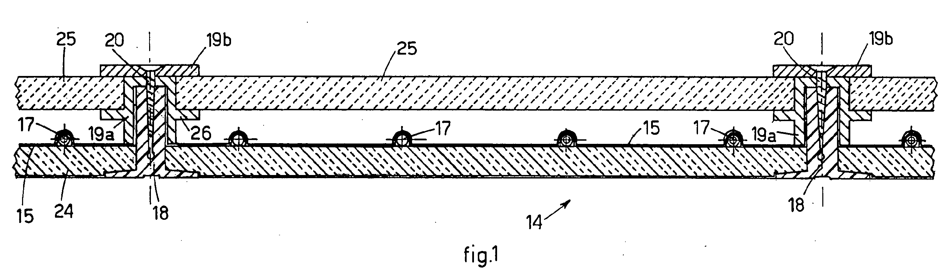

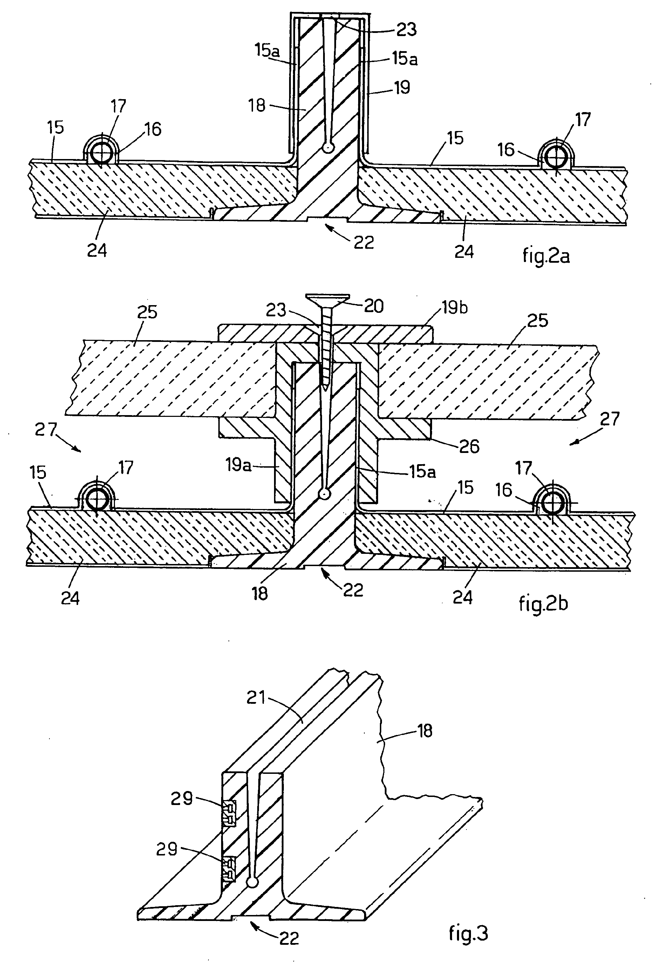

Fig. 1 is a section view a segment of a covering 14 of a roof or an outside wall which uses the integrated modular system according to the invention. This covering 14 comprises a plurality of sheet panels 15, made for example of pre-painted aluminum and advantageously coupled solidly with an insulating layer 24 which is positioned in contact with the lower surface of the sheet panel 15 (figs. 2a and 2b).

The insulating layer 24 preferably consists of semirigid material with low heat conductivity, made solid with the sheet panel 15 by means of a glue resistant to temperature and to differential heat dilations between the insulating material 24 and the panel 15.

The size of the sheet panel 15 can vary according to the type and size of the covering to be made.

According to the invention and as shown in figs. 1, 2a, 2b and 8, the sheet panels 15 are conformed by shaping so as to obtain cavities 16 which constitute one of the solutions provided by the invention for the means for the circulation of the thermal carrier fluid. These cavities 16 preferably have a section at least partly circular and house inside the pipes 17 along which the thermal carrier fluid flows.

In a variant of this form of preferential embodiment, the thermal carrier fluid circulates directly along the cavities 16 obtained by suitably conforming the sheet 15 without a break in continuity. These cavities 16, which are water tight, preferably have a circular section and are suitably sealed by welding.

In a further variant, the means for the circulation of the thermal carrier fluid consist of pipes 17 which are associated outside on the lower or upper side of the sheet panel 15, in this case substantially plane, and attached mechanically or by welding.

Two adjacent sheet panels 15 are connected together along their longitudinal edges 15a by means of an attachment profile 18 and a clamping element 19 (fig. 2a), advantageously made of insulating material and resistant to low and high temperatures and to temperature ranges.

To achieve the attachment, the sheet panels 15 have the longitudinal edges 15a raised so that they can rest on the lateral edges of the attachment profile 18.

The clamping element 19 has a cross section shaped like an upside down U, or rider, and is inserted above the attachment profile 18 on which the longitudinal edges 15a of the sheet panels 15 are already resting, so as to cover them and clamp them.

On the upper side of the clamping element 19 there are holes 23 which allow to insert a plurality of attachment elements 20 such as, for example, screws. The attachment elements 20 clamp the clamping element 19 on the attachment profile 18 so as to attach together the longitudinal edges 15a of two adjacent sheet panels 15.

Fig. 2b shows a second form of embodiment of the integrated modular covering system according to the invention, wherein supplementary panels 25, preferably made of transparent material, are associated with the sheet panels 15. To assemble the panels in this form of embodiment, the invention provides to associate two clamping elements 19a and 19b with the attachment profile 18 as described above.

The clamping element 19a, which is assembled above the attachment element 18, contributes with the attachment element 18 to clamping the longitudinal edges of two adjacent sheet panels 15 and also serves as a support for the longitudinal edges of the supplementary panels 25. The function of the clamping element 19b is to act as an upper closing and attachment element to the supplementary panels 25.

The clamping element 19a consists, in this case, substantially of a profile with a cross section shaped like an upside down U and with lateral wings or extensions 26 on which the longitudinal edges of the supplementary panels 25 rest.

The clamping element 19b consists of a profile with a substantially rectangular section on which there are holes 23, with a pitch corresponding to that of the attachment element 18. This clamping element 19b is placed above the clamping element 19a so as to be able to attach the whole solidly (sheet panels 15, attachment element 18, clamping element 19a, supplementary panels 25, clamping element 19b) with the attachment means 20 described in the previous embodiment.

In this way, the integrated modular system according to the invention allows, by means of simply replacing the clamping element 19 by the clamping elements 19a and 19b, to apply supplementary panels 25 at any time whatsoever to the pre-existing covering, consisting of sheet panels 15 attached to the bearing structure of the wall or roof, without modifying it and without intervening directly thereon.

Fig. 3 shows a slit 21, in the central part of the section of the attachment profile 18, which is preferably triangular in section, extends longitudinally with respect to the profile 18, and is able to receive the attachment elements 20.

In the solution shown here, the lower end of the slit 21 widens in a drop-like shape to convey to the outside any possible infiltrations of water in correspondence with the attachment elements 20 or possible formations of condensation.

In the central lower part the attachment profile 18 has a longitudinal slit 22 which houses, for example, the attachment means or the equipment usually used, for example, to support the gutters or drainpipes.

In this particular form of embodiment, the supplementary panels 25 in fig. 2b are panels made of transparent material, for example glass, able to create a greenhouse effect which reduces heat losses from the capturing sheet panel 15 towards the outer environment.

In this way, the energy absorbed by the sheet panel 15, and therefore by the thermal carrier fluid, is increased.

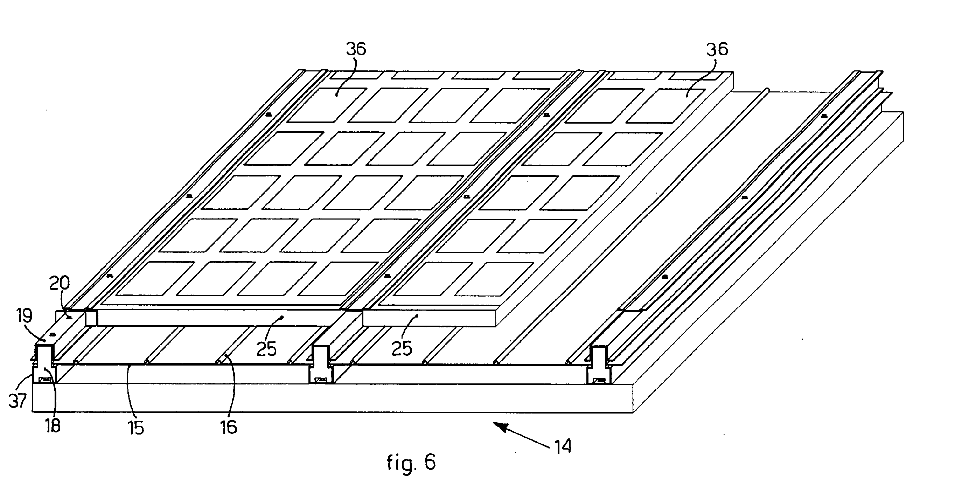

When electric energy is to be produced from solar radiation, the supplementary panel 25 shown in fig. 6 is a photovoltaic panel, that is to say, equipped with photovoltaic cells 36 distributed, advantageously in uniform manner, on the surface of the relative panel 25.

Advantageously, it is also possible to easily assemble photo-voltaic panels instead of the transparent panels at any moment whatsoever without greatly modifying the pre-existing covering structure.

In this case, the attachment profile 18 shown in fig. 3 can be made of conductor wires, preferably made of copper, which allow, by means of pins 29 with a terminal, to connect in parallel the photo-voltaic supplementary panels 25 which make up the integrated modular system according to the present invention.

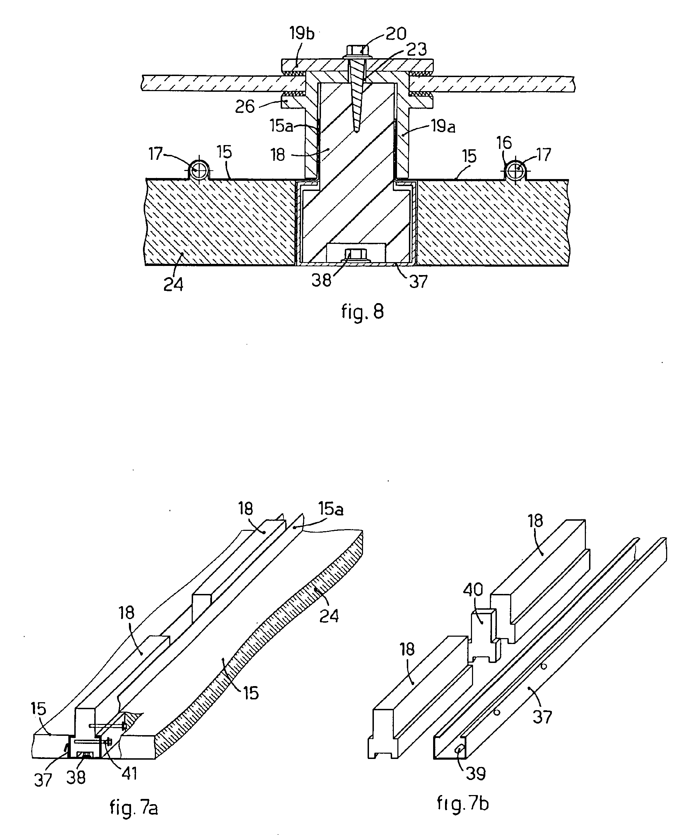

According to the variant shown in figs. 6, 7a, 7b and 8, the attachment profile 18 consists of a sliding element able to be associated with a guide profile 37, advantageously made of stainless steel or other material suitable to ensure the necessary mechanical resistance, such as aluminum, plastic or other. The guide profile 37 is attached to the bearing structure of the covering in an intermediate position between two adjacent panels 15, by means of screws 38 inserted into suitable holes or eyelets 39 prepared in the profile 37 itself (fig. 7b). The screws 38 preferably have an enlarged head in order to ensure a better supporting base.

Inside the profile 37 a plurality of attachment profiles 18 (figs. 7a and 7b) are inserted in sliding manner and with a slight play, both longitudinal and transverse. The attachment profiles 18 are separated from each other by a spacer element 40 made of at least partly elastic material. According to a variant, between two attachment profiles 18, arranged adjacent along the guide profile 37, free spaces are left whereas, according to another variant, the attachment profiles 18 are made of heterogeneous rigid-elastic material.

Even though in the solution shown here the attachment profiles 18 slide inside the guide profile 37, it comes within the field of the invention that said profiles 18 slide outside the relative profile 37.

The attachment profiles 18 can be made mainly of compact material such as wood, PVC or other suitable material.

Thanks to this solution, the attachment profiles 18 absorb and allow a possible linear dilation of the covering panels 25, laid and attached to them, for example deriving from high temperature ranges and/or very high maximum and very low minimum temperatures. This allows to use the covering system according to the invention also in environments characterized by extreme climatic conditions, and to use coverings made of material with a high coefficient of linear dilation and of considerable length.

In the embodiment shown here, every attachment profile 18 has a length less than the interaxis with which the covering panels 25 are attached by the screws 20, so that each of said profiles 18 is burdened by only one attachment.

Advantageously, the attachment profile 18 associated with one end of the relative guide profile 37 is arranged fixed, for example by means of screws 41, so as to create a positioning abutment.

The sliding attachment profiles 18, a great number of which may be inserted inside a relative guide profile 37, allow the guided dilation of the lining above without any problem, at the same time keeping this lining perfectly solid with the bearing structure of the roof or wall.

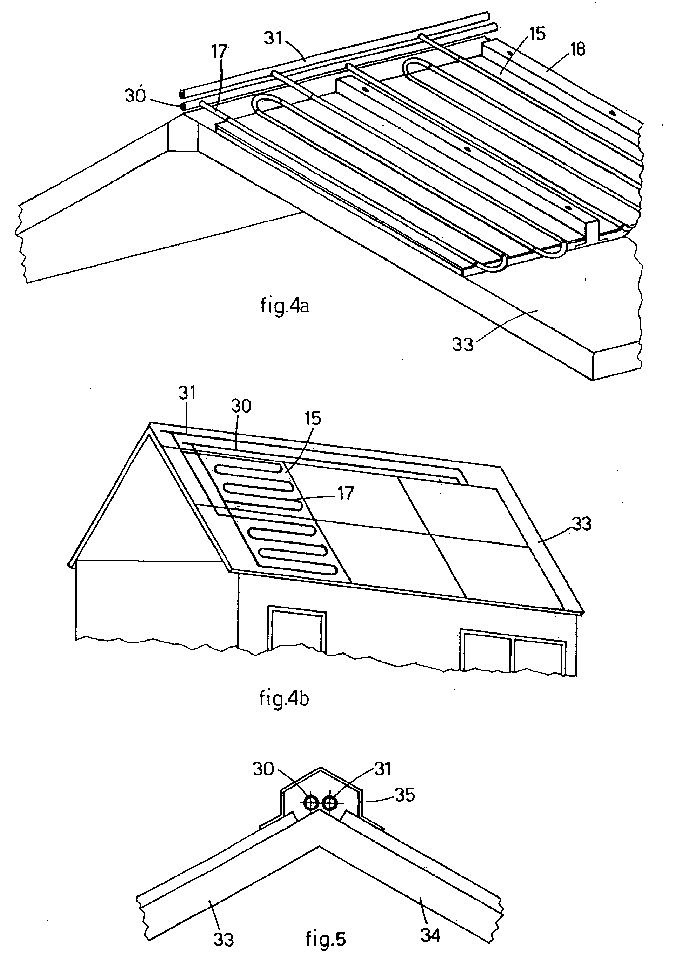

The thermal carrier fluid circulating in the pipe 17 is fed by a delivery collector 30, as shown in fig. 4a. The delivery collector 30 is connected to the end of at least a pipe 17 associated with the sheet panel 15 and is normally placed in the lower part of the covering for the roof or outside wall.

This allows to facilitate the natural circulation of the thermal carrier fluid from the delivery collector 30, in the low position, to a return collector 31 which is normally positioned in the upper part of a pitch 33 of the roof or the outside wall made with the integrated modular system which makes up the covering.

The diversity of the elements which normally make up the covering, however, can also make it necessary to locate both the collectors 30 and 31 at the lower or upper end of the pitch or of the outside wall.

Fig. 4b shows the variant in which the fluid circulation means are positioned transversely with respect to the roof and to the longitudinal axis of the panels.

In the upper part of the pitch 33, as shown in fig. 5, there is also a dome 35 which constitutes the terminal part of both pitches 33 and 34. This dome 35 facilitates the placing and maintenance of at least a delivery collector 30 or a return collector 31, or all the connection cables for the supplementary panel 25 if the latter is of the photo-voltaic type.

The covering according to the present invention allows the greatest possible flexibility of choice since, according to requirements, is able to include zones with only sheet panels, zones with sheet panels and panels made of transparent glass, zones with sheet panels and supplementary panels of the photo-voltaic type.

The choice of the type depends first of all on the requirements of the user and secondly, for example, on the exposure to the sun's rays of the surfaces to be covered.

It is clear that, although the present invention has been described with reference to some specific examples, said examples do not restrict its embodiment.

A person of skill shall certainly be able to make modifications with regard to the materials, shapes and technical embodiments, but all of these shall come within the field of protection of the inventive idea as described in the claims of the present invention.

## Claims

1. Integrated modular system to make covering surfaces (14) for roofs or outside walls of buildings, comprising at least a panel (15) operatively associated with means for the circulation of a thermal carrier fluid, and attachment means to attach said panel (15) to the bearing structure and/or to other adjacent panels (15), **characterized in that** said attachment means (18) are able to selectively cooperate with a clamping element of a first type (19) or with a clamping element of a second type (19a) to join together at least two of said adjacent panels (15), said clamping element of the second type (19a) comprising lateral extensions (26) on which at least a supplementary panel (25) is able to rest.

2. Integrated modular system as in claim 1, **characterized in that** said clamping element of the second type (19a) and said supplementary panel (25) are able to be held in the operative position by a second clamping element (19b).

3. Integrated modular system as in claim 1 or 2, **characterized in that** said clamping elements of the first type (19) and of the second type (19a) are shaped like an upside down U, or rider.

4. Integrated modular system as in any claim hereinbefore, **characterized in that** said means for the circulation of said thermal carrier fluid comprise a plurality of hydraulic circuits.

5. Integrated modular system as in any claim hereinbefore, **characterized in that** said means for the circulation of said thermal carrier fluid comprise a pipe (17) with a section either circular, oval, polygonal, rectangular or other, inside which said thermal carrier fluid circulates.

6. Integrated modular system as in any claim hereinbefore, **characterized in that** said panel (15) is preferably made of metal sheet or plate, with various finishes or surface treatments and/or of other material, which is suitable for the specific use of constructing the panel (15).

7. Integrated modular system as in claim 5, **characterized in that** said pipe (17) is attached to said panel (15).

8. Integrated modular system as in any claim hereinbefore, **characterized in that** said means for the circulation of said thermal carrier fluid comprise a cavity (16), obtained by shaping a sheet panel (15) and made watertight by means of welding.

9. Integrated modular system as in any claim hereinbefore, **characterized in that** a layer of heat insulating material (24) is operatively associated with the inner surface of said panel (15).

10. Integrated modular system as in any claim hereinbefore, **characterized in that** a supplementary panel (25) is operatively associated with the outer surface of said panel (15).

11. Integrated modular system as in any claim hereinbefore, **characterized in that** said supplementary panel (25) comprises a transparent material.

12. Integrated modular system as in any claim hereinbefore, **characterized in that** photovoltaic cells (36) are inserted or integrated in said supplementary panel (25).

13. Integrated modular system as in any claim hereinbefore, **characterized in that** it comprises guide profiles (37) inserted between two adjacent panels (15) or in an intermediate position thereto, and wherein a plurality of said attachment means (18) are able to be positioned in an at least partly sliding manner.

14. Integrated modular system as in claim 13, **characterized in that** a spacer element (40) made of an at least partly elastic material is able to be inserted between two of said attachment means (18) to support the heat dilations of the supplementary panels (25).

15. Integrated modular system as in claim 13, **characterized in that** two of said adjacent attachment means (18) are positioned with a certain play inside the relative guide profile (37).

16. Integrated modular system as in claim 13, **characterized in that** said attachment means (18) are made of heterogeneous rigid-elastic material.

17. Integrated modular system as in any claim from 13 to 16 inclusive, **characterized in that** said attachment means (18) are at least partly made of compact material such as wood or PVC.

18. Integrated modular system as in any claim from 13 to 17 inclusive, **characterized in that** each attachment means (18) has a length less than the interaxis with which the supplementary panels (25) are attached, so as to be burdened by only one attachment point.

19. Integrated modular system as in any claim from 13 to 18 inclusive, **characterized in that** at least an end attachment means (18) is arranged in a fixed manner so as to function as a positioning abutment.

20. Integrated modular system as in any claim hereinbefore, **characterized in that** said attachment means (18) and said clamping means (19, 19a, 19b) are attached to each other by means of attachment elements (20).

21. Integrated modular system as in any claim hereinbefore, **characterized in that** said attachment means (18) comprise a longitudinal slit (21).

22. Integrated modular system as in any claim hereinbefore, **characterized in that** said attachment means (18) comprise, on an inner side, a longitudinal slit (22) arranged centrally.

23. Integrated modular system as in any claim hereinbefore, **characterized in that** said attachment means (18) comprise elements (29) for electric conduction.

24. Integrated modular system as in any claim hereinbefore, **characterized in that** said attachment means (18) and said clamping means (19, 19a, 19b) are made of thermally and electrically insulating material resistant to high/low temperatures.

25. Integrated modular system as in any claim hereinbefore, **characterized in that** said thermal carrier fluid is sent to said circulation means (17) by means of at least a delivery collector (30) and is discharged from said circulation means (17) by means of at least a return collector (31).

26. Integrated modular system as in claim 25, **characterized in that** the delivery (30) and return (31) collectors are positioned at a distance from each other on the covering of the pitch (33, 34) of the roof or wall.

27. Integrated modular system as in claim 25, **characterized in that** the delivery (30) and return (31) collectors are both positioned in a dome at the upper end of the pitch (33, 34) of a covering of the roof.
